# EUROPEAN PATENT APPLICATION

(11) **EP 4 811 129 A1**
(43) Date of publication of application: **23.09.2026**
(21) Application number: 25210225.6
(22) Date of filing: 21.10.2025
(51) Int. Cl.: G06F 9/455

(54) **FASTER INITIALISING VMS BY COPYING THE VIRTUAL DISKS FOR EACH VM FROM A SNAPSHOT COPY, EACH COPY HAVING ITS OWN LOG FILE**

(30) Priority: 19.03.2025 CN 202510330451
(71) Applicant: Beijing Volcano Engine Technology Co., Ltd., Beijing 100190 (CN)
(72) Inventor: SHU, Zhi, Beijing, 100028 (CN); ZHANG, Hequan, Beijing, 100028 (CN); ZHAO, Pengwei, Beijing, 100028 (CN)
(74) Representative: Isarpatent

(57) **Abstract**

A data request processing method for a virtual machine, an electronic device and a storage medium are provided. The method includes: determining, from log index information of a cloud disk, a target snapshot log identifier corresponding to target index information, in response to the cloud disk receiving a snapshot read request that carries the target index information corresponding to a target snapshot log and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk and is used to implement data transmission between the cloud disk and each snapshot log in the snapshot copy (S501); and reading the target snapshot log in the snapshot copy by using the target snapshot log identifier, and feeding back the target snapshot log to the virtual machine (S502).

## Description

### TECHNICAL FIELD

Embodiments of the present disclosure relate to the field of cloud computing technologies, and in particular, to a data request processing method for a virtual machine, an electronic device and a storage medium.

### BACKGROUND

A virtualization technology is a basic technology in the cloud computing industry. There are a large number of elasticity requirements in current cloud computing services. For example, an Elastic Computing Service (ECS) cluster may quickly start a large number of virtual machines based on a requirement of the user. Because a user's service may have a service peak, a high requirement is placed on elasticity of the ECS cluster. In other words, the ECS cluster is required to be able to start a large number of virtual machines in a short time.

When starting a large number of virtual machines, quickly cloning cloud disks in batch by using a snapshot copy is a major challenge. To be able to quickly clone a large number of cloud disks and immediately start the virtual machines, the virtual machines cannot be started only after all snapshot data is downloaded from an image center to the cloud disks. Instead, a lazy loading technology needs to be used. A communication link is established between a cloud disk and a snapshot copy. When a virtual machine needs to use specific snapshot data during startup, the cloud disk corresponding to the virtual machine reads the snapshot data from the snapshot copy through the established communication link.

However, the inventors have found that in the process of starting virtual machines in batch, a large number of cloud disks need to be quickly cloned. In this case, a large number of cloud disks need to establish communication links with a snapshot copy, and a long time is required to establish the communication links. Therefore, the efficiency of starting the virtual machines in batch is poor.

### SUMMARY

Embodiments of the present disclosure provide a data request processing method and apparatus for a virtual machine, an electronic device and a storage medium, which can improve the efficiency of starting virtual machines in batch.

An embodiment of the present disclosure provides a data request processing method for a virtual machine, which includes:

determining, from log index information of a cloud disk, a target snapshot log identifier (e.g. first snapshot log identifier) corresponding to target index information (e.g. first index information), in response to the cloud disk receiving a snapshot read request that carries the target index information corresponding to a target snapshot log (e.g. first snapshot log) and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk and is used to implement data transmission between the cloud disk and each snapshot log in the snapshot copy; and

reading the target snapshot log in the snapshot copy by using the target snapshot log identifier, and feeding back the target snapshot log to the virtual machine.

An embodiment of the present disclosure provides a data request processing apparatus for a virtual machine, which includes:

a receiving unit configured to determine, from log index information of a cloud disk, a target snapshot log identifier corresponding to target index information, in response to the cloud disk receiving a snapshot read request that carries the target index information corresponding to a target snapshot log and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk, and is used to implement data transmission between the cloud disk and each snapshot log in the snapshot copy; and

a data request processing unit configured to read the target snapshot log in the snapshot copy by using the target snapshot log identifier, and feed back the target snapshot log to the virtual machine.

An embodiment of the present disclosure provides an electronic device, including: at least one processor and at least one memory,

where the at least one memory stores a computer-executed instruction; and

the at least one processor executes the computer-executed instruction stored in the at least one memory, to enable the at least one processor to execute the data request processing method for the virtual machine according to at least one of the above embodiments.

An embodiment of the present disclosure provides a non-transitory computer-readable storage medium, where a computer-executed instruction is stored in the non-transitory computer-readable storage medium, and when the computer-executed instruction is executed by a processor, the data request processing method for the virtual machine according to at least one of the above embodiments is implemented.

An embodiment of the present disclosure provides a computer program product, including a computer program, where when the computer program is executed by a processor, the data request processing method for the virtual machine according to at least one of the above embodiments is implemented.

### BRIEF DESCRIPTION OF DRAWINGS

To describe the technical solutions in the embodiments of the present disclosure more clearly, the following briefly introduces drawings required for describing the embodiments. Apparently, the drawings in the following description show some embodiments of the present disclosure, and other drawings may also be obtained by a person of ordinary skill in the art according to these drawings without creative efforts.
Fig. 1 is a schematic flowchart of a lazy loading technology in batch cloning of virtual machines for cloud computing according to an embodiment of the present disclosure;
Fig. 2 is a schematic flowchart of sharing a log file of a snapshot copy according to an embodiment of the present disclosure;
Fig. 3 is a schematic flowchart of establishing a hard link between a snapshot copy and a plurality of cloud disks according to an embodiment of the present disclosure;
Fig. 4 is a schematic flowchart of establishing a soft link between a snapshot copy and a plurality of cloud disks according to an embodiment of the present disclosure;
Fig. 5 is a flowchart of a data request processing method for a virtual machine according to an embodiment of the present disclosure;
Fig. 6 is a schematic flowchart of adding a new snapshot copy according to an embodiment of the present disclosure;
Fig. 7 is a schematic flowchart of switching a snapshot read request to a lazy loading path according to an embodiment of the present disclosure;
Fig. 8 is a schematic diagram of a structure of a virtual machine data request processing apparatus according to an embodiment of the present disclosure; and
Fig. 9 is a schematic diagram of a structure of an electronic device according to an embodiment of the present disclosure.

### DETAILED DESCRIPTION

To make objectives, technical solutions, and advantages of embodiments of the present disclosure clearer, the technical solutions in the embodiments of the present disclosure are clearly and completely described below with reference to the drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

It should be noted that user information (including but not limited to user device information, user personal information, and the like) and data (including but not limited to data for analysis, stored data, displayed data, and the like) involved in one or more embodiments of this specification are information and data authorized by a user or fully authorized by all parties, and collection, use, and processing of the related data need to comply with related laws, regulations, and standards, and corresponding operation entry is provided for the user to select authorization or rejection.

The following first explains some nouns in the embodiments of the present disclosure.

Elastic Computing Service (ECS) cluster: an elastic computing service provided by a cloud vendor, which may include a plurality of virtual machines. The ECS cluster includes a plurality of nodes, and one node is one virtual machine.

Elastic Block Storage (EBS) cluster: an elastic block storage service provided by a cloud vendor, which may include a plurality of servers (namely, nodes). In the embodiments of the present disclosure, the EBS cluster includes a plurality of nodes, and one node is one cloud disk.

Availability zone (AZ): a management unit of independent power and network resources for a user in cloud computing, which may include a plurality of ECS clusters and a plurality of EBS clusters.

Region: a management unit of a single region in cloud computing, which includes a plurality of availability zones.

Cloud disk (Device): a virtual block device provided by the EBS cluster, including an empty disk and a snapshot clone cloud disk. In at least one embodiment, the empty disk may be a cloud disk that does not store a snapshot copy. The snapshot clone cloud disk may be a cloud disk that has stored a snapshot copy.

Cloud disk segment (Device Segment): a cloud disk may be divided into a plurality of cloud disk segments according to a fixed size. For example, a 128 GB cloud disk may be divided into four 32 GB cloud disk segments.

Snapshot: a value-added service of the EBS cluster, which saves an instantaneous data snapshot of a cloud disk on object storage of an image center.

Snapshot copy: a storage form after snapshot data is downloaded to the EBS cluster.

Snapshot segment: a snapshot copy may be divided into a plurality of snapshot segments according to a fixed size. For example, a 32 GB snapshot copy may be divided into four 8 GB snapshot segments.

Strip: including the size of strip (for example, 32 KB) and the number of strip (for example, 64).

Image: a single snapshot or a group of snapshots used to start a virtual machine, where data is stored in a snapshot format.

Image center: a module responsible for managing images of a plurality of virtual machines in the ECS cluster.

Batch cloning: creating cloud disks in batch by using an image, and running virtual machine instances in batch based on the cloud disks.

Lazy loading (Lazyload): in a process of creating a cloud disk by using an image and starting a virtual machine, the virtual machine may be directly started without waiting for the image data to be loaded onto the cloud disk.

IO hang: an IO remains unsuccessful during a retry process.

A virtualization technology is a basic technology in the cloud computing industry. There are a large number of elasticity requirements in current cloud computing services. For example, the ECS cluster may quickly start a large number of virtual machines based on a requirement of the user. Because a user's service may have a service peak, a high requirement is placed on elasticity of the ECS cluster. In other words, the ECS cluster is required to be able to start a large number of virtual machines in a short time.

When starting a large number of virtual machines, quickly cloning cloud disks in batch by using a snapshot copy is a major challenge. To be able to quickly clone a large number of cloud disks and immediately start the virtual machines, the virtual machines cannot be started only after all snapshot data is downloaded from an image center to the cloud disks. Instead, a lazy loading technology needs to be used. A communication link is established between a cloud disk and a snapshot copy. When a virtual machine needs to use specific snapshot data during startup, the cloud disk corresponding to the virtual machine reads the snapshot data from the snapshot copy through the established communication link.

In the process of starting virtual machines in batch, a large number of cloud disks need to be quickly cloned. In this case, a large number of cloud disks need to establish communication links with a snapshot copy, and a long time is required to establish the communication links. Therefore, the efficiency of starting the virtual machines in batch is poor.

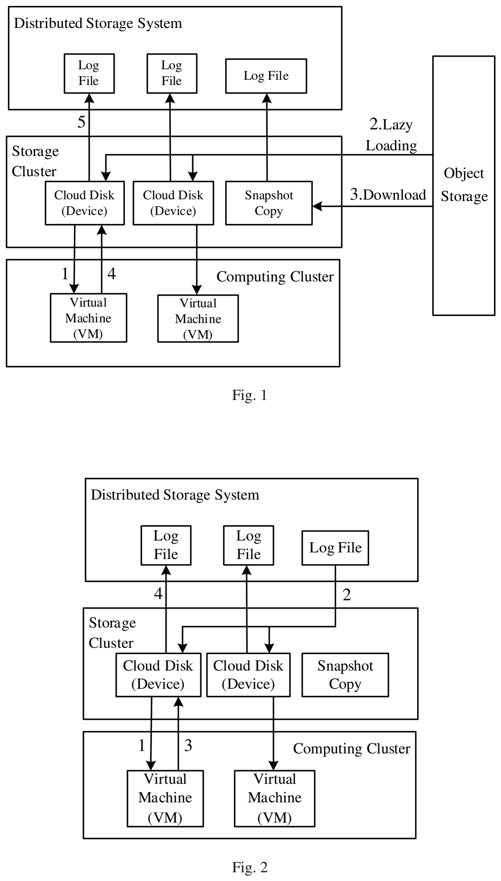

Exemplarily, Fig. 1 is a schematic diagram of a lazy loading technology in batch cloning of virtual machines for cloud computing according to an embodiment of the present disclosure. As shown in Fig. 1, a data flow process in snapshot data distribution is as follows.

1. A virtual machine (VM) in a computing cluster sends a request for reading snapshot data to a cloud disk (Device) in a storage cluster. 2. The cloud disk (Device) in the storage cluster sends a request for reading snapshot data to the object storage. 3. The cloud disk (Device) in the storage cluster downloads a snapshot copy from an image center. 4. The virtual machine writes new data to the cloud disk (Device) in the storage cluster. 5. The storage cluster establishes a log file corresponding to the snapshot copy in distributed storage for a write operation.

As shown in Fig. 2, in a download process of the snapshot copy, the log file corresponding to the snapshot copy is created in the distributed storage, and the created log file is shared with cloud disks (Devices) created in batch. Fig. 2 shows a process of how the log file of the snapshot copy is shared between a plurality of cloud disks (Devices). 1. The virtual machine in the computing cluster sends a request for reading snapshot data to the cloud disk in the storage cluster. 2. The cloud disk in the storage cluster sends a request for reading the log file of the snapshot copy to the distributed storage. 3. The virtual machine in the computing cluster sends a write request to the cloud disk in the storage cluster. 4. The cloud disk of the storage cluster writes data to the log file in the distributed storage.

In a batch cloning scenario, after snapshot data is downloaded, the snapshot data is shared with a large number of cloud disks at the same time. When these cloud disks initiate data reading at the same time, read hotspots are likely to be formed for snapshot copy data, which easily causes pressure on the storage cluster and reduces performance of the cloud disks. The present disclosure mainly solves the following three technical problems for the read hotspot problem in the batch cloning scenario.
1. The number of cloud disks created by a user and a behavior of using the cloud disks cannot be effectively predicted. How to determine the number of snapshot copies to be used during lazy loading to ensure that traffic of the user is not affected after snapshot replica download is controlled.
2. Single-piece data of a snapshot copy is shared by a plurality of cloud disks. When traffic of a cloud disk that has been linked suddenly increases, how to solve the problem of ensuring quality of IO of the user when hotspot traffic is generated.
3. When the user deletes a cloud disk created by a snapshot, or read traffic of a snapshot copy is reduced, and when not too many copies are required for support, how to perform garbage collection to reduce the number of copies to save costs.

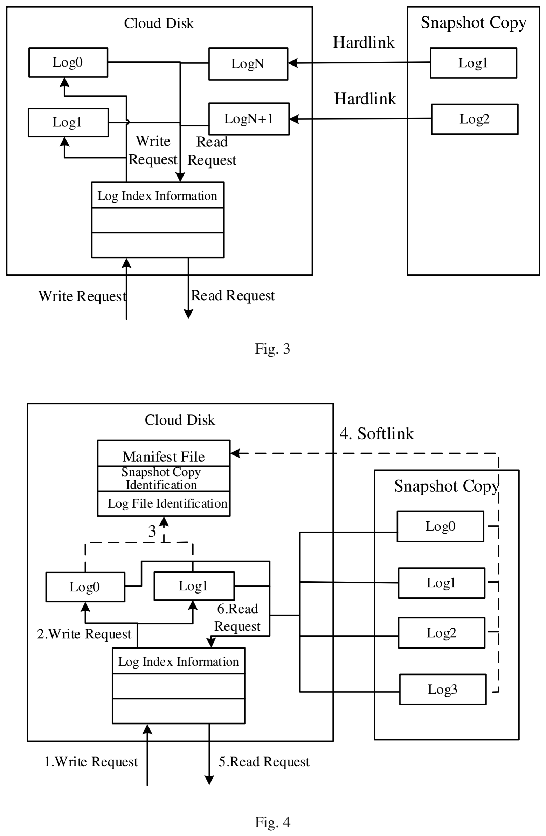

In some embodiments, a Hardlink technology is used to link snapshot copy data to a plurality of cloud disks, and the snapshot copy data uses a manner of multi-strip and multi-segment dispersion to disperse the data in different storage units of distributed storage. The Hardlink technology is shown in Fig. 3. 1. A log file mapped by a read/write operation of a cloud disk (Device) is stored through log index information (Index Map). 2. A log file dedicated to the cloud disk (Device) is written to directly. 3. The Hardlink technology is provided by the underlying distributed storage, and is to create a new name for the log file, and a data reference remains the same. In this case, the Log file generated by the snapshot copy is linked to different cloud disks (Devices) by the Hardlink. For example, Log1 and Log2 in the snapshot copy may be mapped to LogN and LogN+1. Each Device needs to be mapped to a different file. 4. The Index Map is modified to add the new Log file to mapping conversion of the Index Map.

In the preceding technical solution, the hotspot problem of the snapshot data is largely solved, but the following problems still remain to be solved.
1. A fixed dispersion manner cannot be flexibly adjusted with a mode of creating a cloud disk by the user and reading data. Read traffic control during lazy loading is different from read traffic control after snapshot copy download is completed. During lazy loading, reads are mainly performed from a cache or from object storage. Therefore, the traffic is related only to the number of nodes of the cluster, and lazy loading traffic dispersion may be completely dispersed on all the nodes. All lazy loading cloud disks share the same bandwidth. After the snapshot copy download is completed, although the data may be dispersed on all the nodes, the traffic of a single data block (Chunk) is still limited by a service thread and a cloud disk.

A manner of dispersing snapshot copy data strips is determined when a copy is downloaded, but the number of cloud disks (Devices) created in batch by the user and a size of the read traffic cannot be known during the download.

Exemplarily, a dispersion format is a 2 MB cloud disk segment (Segment), in which eight 64 KB log files are used for dispersion. The log file format is three copies, and a common cloud disk (Device) uses four cloud disk segments (Segments) as a group. Therefore, a dispersion distribution degree of 8 MB of valid data is: 3 (copies) * 8 (logs) * 4 (Segments) = 96 data blocks. It is assumed that a single data block (Chunk) can provide a traffic of 200 MB/s, and therefore a traffic that can be provided by the entire copy is 18.75 GB/s. It is assumed that the number of cloud disks (Devices) created in batch is 1000. In this case, each cloud disk (Device) may be allocated only a read speed of 19.2 MB/s.

Therefore, a more flexible horizontal expansion dispersion manner is needed, so that the number of dispersions may be dynamically adjusted based on the batch creation behavior of the user, traffic may be dispersed to more chunks when a read hotspot occurs, and better read performance is provided for the user when cluster resources are sufficient. Moreover, when it is necessary to provide a smoother traffic elasticity experience for the user, an additional traffic channel needs to be provided before copy warming is completed, to be able to temporarily expand read performance.
2. Based on a copy linking manner of Hardlink, once the link is established, the cost of adjusting the copy is high. In the preceding technical solution, the technical solution using the Hardlink depends on the underlying distributed storage to control the reference relationship between files, and is highly dependent on the Hardlink capability provided by the underlying storage. In addition, in the batch creation scenario, because the number of Devices is very large, the number of requests that need to be linked is very large. Still use the preceding scenario to perform theoretical calculation. For dispersion with 1000 Devices, 4 segments, and 8 log files, when all these files need to be linked, 1000 * 4 * 8 = 32000 requests to the underlying storage are required.

When the preceding read hotspot problem occurs and a copy needs to be switched, the number of requests further increases. First, the old copy in the Device needs to be dereferenced, and then the linking operation is performed. It is assumed that 500 Devices need to be migrated to a new copy. In this case, 500 * 4 * 8 = 16000 requests to dereference are required, and then 500 * 4 * 8 = 16000 requests to re-establish the reference relationship are required.

Therefore, using the hardlink technical solution to establish or re-establish a link is a heavy operation, and requires a strong capability of the underlying storage. When it is desired to dynamically adjust the dispersion degree, a relatively lightweight sharing operation to enable more frequent and timely adjustment is required.

For the above-mentioned technical problem, the technical concept of the inventors is as follows. The present disclosure uses a brand-new linking manner, which may be referred to as Softlink in contrast to the Hardlink. The Softlink uses a link at the Segment (cloud disk segment) level, and only records a log file name in the manifest file (Manifest), but does not actually create a link on the distributed storage, and each segment is completely independently managed. In this case, no link needs to be created, and no link request needs to be sent. In other words, the Softlink does not need to actually create a fixed communication link between the snapshot copy and the cloud disk, so that the time required to establish the communication link is saved, and the efficiency of starting the virtual machines in batch is improved.

Exemplarily, as shown in Fig. 4, the soft link solution implemented in the present disclosure may include the following steps.
1. A write operation is initiated on a cloud disk (Device). 2. New data is written into a new log file (log0 and log1 corresponding to the cloud disk in Fig. 4) in the distributed storage, and log index information (Index Map) of the Device is updated. 3. The new log file is recorded in the Manifest of the Device. 4. Softlink is performed: log files (log0, log1, log2, and log3 corresponding to the snapshot copy in Fig. 4) in a snapshot copy are written into the manifest file (Manifest) of the cloud disk (Device) in batch, and the log index information (Index Map) is updated. 5. After the link is completed, a read operation is initiated on the Device. 6. After conversion is performed through the log index information (Index Map), the read operation is converted into a read operation on the log file of the Device or a read operation on the log file of the snapshot copy.

Compared with the Hardlink solution, the Softlink solution saves the number of requests for creating a link for each log file in terms of the number of requests for writing data to the underlying distributed storage, so that the switching may be more flexible and convenient.

For example, a cloud disk (Device) includes Y cloud disk segments (Segments), and a cloud disk segment (Segment) includes X log files. Refreshing the manifest file (Manifest) requires statistic, open, and rename operations. For one operation of opening the Index Map, a Queries Per Second (QPS) that may be provided by the underlying distributed storage for a link is a fixed value: Q.

The number of requests required for a Hardlink is N_{hard} = (X_{hard} + 3_{manifest} + 1_{indexmap}) * Y. The request time required to be consumed is T_{hard} = N_{hard}/Q, where X_{hard} represents the number of requests for creating an actual link. The number of requests required for the Softlink is N_{soft} = (3_{manifest} + 1_{indexmap}) _{*} Y. The request time required to be consumed is T_{soft} = N_{soft}/Q.

Assuming that common values are substituted for calculation: one Device includes four Segments; one Segment includes eight log files; and 500 Devices are switched. It is calculated that the request QPS that may be released by the underlying distributed storage for the link is 4K: ${T}_{hard} = 12 \left(8+4\right) ∗ 4 ∗ \frac{500}{4000} = 6 s$ ; ${T}_{soft} = 4 ∗ 4 ∗ \frac{500}{4000} = 2 s$.

It may be learned that in the Softlink solution, the request time consumed by copy switching is independent of the data amount of the cloud disk. However, the request time consumed by the Hardlink linearly increases with the number of log files. In a common actual case, time overhead of the Softlink solution is 1/12 of that of the Hardlink. Moreover, when the number of Devices increases or the capacity of the Device is larger, the time overhead of the Hardlink is more significantly amplified.

The following describes a specific implementation process of the data request processing method and apparatus for the virtual machine the electronic device and the storage medium according to the embodiments of the present disclosure. Some examples are merely examples and are not intended to limit the present disclosure. An execution body of the data request processing method for the virtual machine according to the embodiments of the present disclosure is an electronic device, which may be a terminal, a server, or the like.

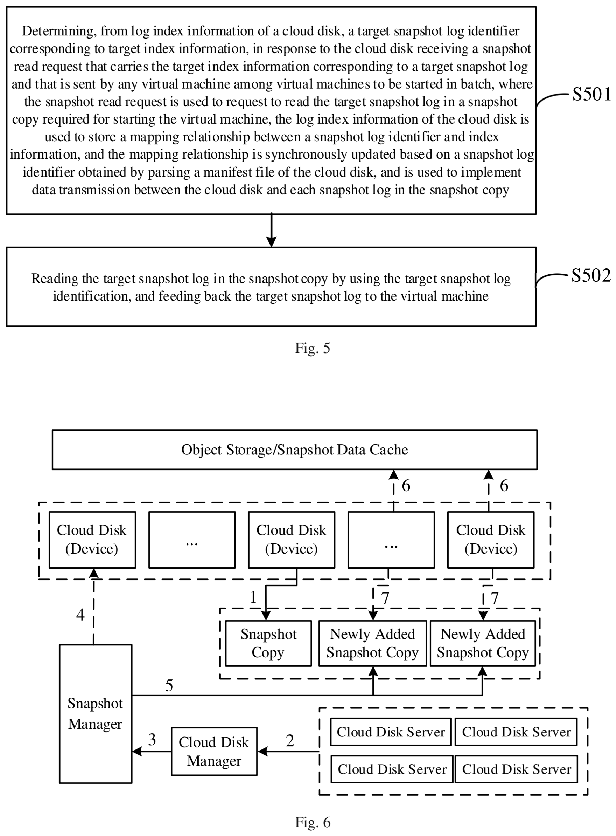

Fig. 5 is a flowchart of a data request processing method for a virtual machine according to an embodiment of the present disclosure. As shown in Fig. 5, the data request processing method for the virtual machine may include S501~S502.

S501: determining, from log index information of a cloud disk, a target snapshot log identifier corresponding to target index information, in response to the cloud disk receiving a snapshot read request that carries the target index information corresponding to a target snapshot log and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk, and is used to implement data transmission between the cloud disk and each snapshot log in the snapshot copy.

In at least one embodiment of the present disclosure, in the process of starting the virtual machines in batch, each virtual machine may read, through the cloud disk, data required for starting the virtual machine. Optionally, the snapshot read request received by the cloud disk may be sent by the virtual machine in a lazy loading startup process, and is used to acquire the data required for starting the virtual machine (that is, the target snapshot log in the snapshot copy). Lazy loading startup means that in the process of creating the cloud disk by using the snapshot copy and starting the virtual machine, the virtual machine may be directly started without waiting for the snapshot copy data to be loaded into the cloud disk.

Optionally, in the scenario of starting the virtual machines in batch, the cloud disk may be any one of a plurality of cloud disks created in an elastic storage cluster when the virtual machines are started in batch. The virtual machine may be any virtual machine that needs to be started in batch in an elastic computing cluster. Optionally, the snapshot copy may be represented as Snapshot Copy, and the snapshot log may be represented as Log.

In some embodiments, the snapshot log identifier obtained by parsing the manifest file of the cloud disk includes: "Log0, Log1, Log2, and Log3". Correspondingly, the log index information of the cloud disk stores: a mapping relationship between the snapshot log identifier "Log0" and index information 1, which is used to implement data transmission between the cloud disk and the snapshot log Log0; a mapping relationship between the snapshot log identifier "Log1" and index information 2, which is used to implement data transmission between the cloud disk and the snapshot log Log1; a mapping relationship between the snapshot log identifier "Log2" and index information 3, which is used to implement data transmission between the cloud disk and the snapshot log Log2; and a mapping relationship between the snapshot log identifier "Log3" and index information 4, which is used to implement data transmission between the cloud disk and the snapshot log Log3. The manifest file may be represented as a Manifest.

Optionally, the target index information includes an offset. For example, a plurality of snapshot log identifiers included in snapshot copy information are "Log0, Log1, Log2, and Log3". The mapping relationship between the snapshot log identifier and the index information includes: Log0 and an offset 0; Log1 and an offset 1024; Log2 and an offset 2048; and Log3 and an offset 3072.

In this step, when the target index information in the snapshot read request is 1024, the target snapshot log identifier corresponding to the target index information is Log1.

It should be noted that, as shown in Fig. 4, when there are a plurality of snapshot copies, the manifest file may further include a snapshot copy identifier. The target snapshot copy for establishing data transmission with the cloud disk may be determined from the plurality of snapshot copies through the snapshot copy identifier. The log index information of the cloud disk is used to store a mapping relationship among a snapshot copy identifier, a snapshot log identifier, and index information; and the mapping relationship is synchronously updated based on the snapshot copy identifier and the snapshot log identifier that are obtained by parsing the manifest file of the cloud disk.

Exemplarily, the snapshot copy identifier obtained by parsing the manifest file of the cloud disk is "copy 1", and the plurality of snapshot log identifiers are "Log0, Log1, Log2, and Log3". Correspondingly, the log index information of the cloud disk stores: a mapping relationship among the copy 1, Log0, and index information 1, which is used to implement data transmission between the cloud disk and the snapshot log Log0 in the copy 1; a mapping relationship among the copy 1, Log1, and index information 2, which is used to implement data transmission between the cloud disk and the snapshot log Log1 in the copy 1; a mapping relationship among the copy 1, Log2, and index information 3, which is used to implement data transmission between the cloud disk and the snapshot log Log2 in the copy 1; and a mapping relationship among the copy 1, Log3, and index information 4, which is used to implement data transmission between the cloud disk and the snapshot log Log3 in the copy 1.

In some embodiments, to further improve the efficiency of starting the virtual machines in batch, the cloud disk may be divided into a plurality of cloud disk segments. Correspondingly, the snapshot copy includes a plurality of snapshot segments in a one-to-one correspondence with the plurality of cloud disk segments, and each snapshot segment includes a plurality of snapshot logs. In this case, the data required for starting the virtual machine may be read from the snapshot segment corresponding to the cloud disk segment.

Exemplarily, the cloud disk includes a cloud disk segment 1, a cloud disk segment 2, and a cloud disk segment 3. A snapshot copy 1 includes a snapshot segment 1 corresponding to the cloud disk segment 1, a snapshot segment 2 corresponding to the cloud disk segment 2, and a snapshot segment 3 corresponding to the cloud disk segment 3. The snapshot segment 1 includes log files "Log0, Log1, Log2, and Log3", the snapshot segment 2 includes log files "Log4, Log5, Log6, and Log7", and the snapshot segment 3 includes log files "Log8, Log9, Logl0, and Log11".

In some embodiments, the target index information may further include a cloud disk segment identifier. Correspondingly, this step may include: determining, by using the cloud disk segment identifier in the target index information, a target cloud disk segment corresponding to the snapshot read request in response to the cloud disk receiving the snapshot read request that carries the target index information corresponding to the target snapshot log and that is sent by any virtual machine among virtual machines to be started in batch; and determining, from log index information of the target cloud disk segment, the target snapshot log identifier corresponding to the target index information.

Optionally, for each cloud disk segment, a manifest file of the cloud disk segment is pre-written with snapshot log identifiers of the plurality of snapshot logs of a snapshot segment corresponding to the cloud disk segment, and the snapshot log identifier in the log index information of the cloud disk segment is synchronously updated based on the snapshot log identifier obtained by parsing the manifest file of the cloud disk segment, and is used to implement data transmission between the cloud disk segment and each snapshot log in the snapshot copy.

Exemplarily, the manifest file of the cloud disk segment 1 includes log file identifiers "Log0, Log1, Log2, and Log3". The manifest file of the cloud disk segment 2 includes log file identifiers "Log4, Log5, Log6, and Log7". The manifest file of the cloud disk segment 3 includes log file identifiers "Log8, Log9, Log10, and Log11".

The log index information of the cloud disk segment 1 includes index information corresponding to the log file identifiers "Log0, Log1, Log2, and Log3", respectively. The log index information of the cloud disk segment 2 includes index information corresponding to the log file identifiers "Log4, Log5, Log6, and Log7", respectively. The log index information of the cloud disk segment 3 includes index information corresponding to the log file identifiers "Log8, Log9, Log10, and Log11", respectively.

Exemplarily, the target index information carried in the snapshot read request is: "offset, 1024" and "cloud disk segment identifier, cloud disk segment 1". In this case, it is determined, through the cloud disk segment identifier, that the target cloud disk segment is the cloud disk segment 1. It is determined, from the log index information of the cloud disk segment 1 (the index information corresponding to the log file identifiers "Log0, Log1, Log2, and Log3", respectively), that the target snapshot log identifier corresponding to the offset 1024 is Log1.

It should be noted that, as shown in Fig. 1, the cloud disk may further receive a data write request sent by the virtual machine. In this case, a new log file may be created to record the foregoing write operation. Correspondingly, the method further includes: creating a new log file in the cloud disk in response to the cloud disk receiving a data write request sent by any virtual machine among the virtual machines to be started in batch; and writing a log identifier of the new log file into the manifest file of the cloud disk, and adding index information corresponding to the log identifier of the new log file to the log index information of the cloud disk.

In S502, the target snapshot log in the snapshot copy is read by using the target snapshot log identifier, and the target snapshot log is fed back to the virtual machine.

In at least one embodiment of the present disclosure, the file size of the snapshot log is not specifically limited. Optionally, the target snapshot log may be a snapshot log required for starting the virtual machine.

In some embodiments, the cloud disk reads the target snapshot log in the snapshot copy by using the target snapshot log identifier, and feeds back the target snapshot log to the virtual machine, to implement the data transmission between the cloud disk and each snapshot log in the snapshot copy. In some other embodiments, the cloud disk includes a plurality of cloud disk segments. Correspondingly, this step may include: reading, by the target cloud disk segment by using the target snapshot log identifier, the target snapshot log required for starting the virtual machine from the snapshot segment corresponding to the target cloud disk segment, and feeding back the target snapshot log to the virtual machine. The target snapshot log identifier is the target snapshot log identifier determined in S502.

This embodiment of the present disclosure provides a data request processing method for a virtual machine. In the method, the target snapshot log identifier corresponding to the target index information is determined from the log index information of the cloud disk in response to the cloud disk receiving the snapshot read request that carries the target index information corresponding to the target snapshot log and that is sent by any virtual machine among the virtual machines to be started in batch, where the snapshot read request is used to request to read the target snapshot log in the snapshot copy required for starting the virtual machine, the log index information of the cloud disk is used to store the mapping relationship between the snapshot log identifier and the index information, and the mapping relationship is synchronously updated based on the snapshot log identifier obtained by parsing the manifest file of the cloud disk, and is used to implement the data transmission between the cloud disk and each snapshot log in the snapshot copy; and the target snapshot log in the snapshot copy is read by using the target snapshot log identifier, and the target snapshot log is fed back to the virtual machine. In the technical solution provided in at least one embodiment of the present disclosure, because the log file identifier is recorded in the manifest file, and the snapshot log identifier in the mapping relationship is synchronously updated based on the snapshot log identifier obtained by parsing the manifest file of the cloud disk, when the cloud disk receives the snapshot read request sent by any virtual machine among the virtual machines to be started in batch, the data transmission between the cloud disk and each snapshot log in the snapshot copy may be implemented through the mapping relationship, to implement the lightweight copy linking. In the present disclosure, the underlying storage does not need to actually create a fixed communication link between the snapshot copy and the cloud disk, so that the time required to establish the communication link is saved, and the efficiency of starting the virtual machines in batch is improved.

It should be noted that when the dynamic copy dispersion policy is used only during the lazy loading period, the number of copies is fixed after the lazy loading ends. When the user traffic increases after the lazy loading ends, the number of copies still cannot meet the requirements of the user. To solve this problem, the feedback elasticity policy of the elastic computing service cluster may be applied not only during the lazy loading period, but also after the lazy loading ends, the number of copies may be dynamically adjusted based on the traffic to meet the requirements of the user. This requires the elastic computing service cluster to use a more flexible manner to link the copies, to facilitate dynamic adjustment of the number of copies.

In at least one embodiment of the present disclosure, the Softlink technical solution is used, and because the Softlink does not need to actually create a fixed communication link between the snapshot copy and the cloud disk, the time required to establish the communication link is saved. Therefore, after the lazy loading ends, the number of copies may be dynamically adjusted based on the traffic to meet the requirements of the user.

In some embodiments, the number of copies may be dynamically adjusted based on traffic and delay feedback information of the cloud disk. In the process of dynamically adjusting the number of copies, a fast copy traffic switch may be implemented in conjunction with the lightweight copy linking solution.

Optionally, a method for dynamically expanding the number of copies includes S11 and S12.

In S11, traffic of snapshot read requests received by a plurality of cloud disks in an elastic storage cluster is monitored, and a plurality of target cloud disks (e.g. first cloud disks) are selected from the plurality of cloud disks in response to the traffic reaching preset traffic.

In at least one embodiment of the present disclosure, a value of the preset traffic is not specifically limited. Optionally, the preset traffic may be maximum traffic that may be processed by the plurality of cloud disks. For example, the elastic storage cluster includes a cloud disk 1 to a cloud disk 10, and the maximum traffic that may be processed by each cloud disk is 10 GB. Therefore, the preset traffic is 100 GB.

Optionally, the preset traffic may be a preset multiple of the maximum traffic that may be processed by the plurality of cloud disks. For example, the preset multiple is 0.5, the elastic storage cluster includes the cloud disk 1 to the cloud disk 10, and the maximum traffic that may be processed by each cloud disk is 10 GB. Therefore, the preset traffic is 100 GB * 0.5 = 50 GB.

In this step, one or more target cloud disks may be selected from the plurality of cloud disks. In some embodiments, a number of target cloud disks may be determined based on a difference between current traffic and the preset traffic.

Optionally, a larger difference corresponds to a larger number of target cloud disks. Exemplarily, the elastic storage cluster includes the cloud disk 1 to the cloud disk 10. When the monitored traffic of the snapshot read requests received by the plurality of cloud disks in the elastic storage cluster is 100 GB and the preset traffic is 50 GB, a difference between the current traffic and the preset traffic is 50 GB. In this case, the number of the plurality of target cloud disks may be 5. In this case, the snapshot read requests that cannot be processed in time by the cloud disks may be switched to the lazy loading path for reading.

It should be noted that the plurality of target cloud disks may be randomly selected, or may be selected based on load situations of the plurality of cloud disks. Optionally, the plurality of target cloud disks is sequentially selected from the plurality of cloud disks in a descending order of loads based on the load situations of the plurality of cloud disks.

In S12, snapshot read requests of the plurality of target cloud disks are switched to a lazy loading path for reading, and the number of snapshot copies corresponding to the plurality of cloud disks is increased.

Optionally, a method for increasing the number of snapshot copies corresponding to the plurality of cloud disks includes steps (1) to (3).
(1) Determining delay traffic corresponding to the elastic storage cluster.

Optionally, determining the delay traffic corresponding to the elastic storage cluster includes steps (a) to (c).
(a) Acquiring a delay duration of each cloud disk for processing the snapshot read request, a rated delay duration of the cloud disk for processing the snapshot read request, and traffic of each cloud disk for receiving the snapshot read request.

In some embodiments, the traffic of each cloud disk in the elastic storage cluster may be represented as S, the traffic that can be provided by a single snapshot copy may be represented as T, the delay duration of each cloud disk for processing the snapshot read request (that is, a delay of a cloud disk IO request on a server) is X, and the rated delay duration of the cloud disk for processing the snapshot read request may be represented as Y.
(b) Determining an average delay duration of the plurality of cloud disks for processing the snapshot read requests based on the delay duration of each cloud disk for processing the snapshot read request.

In some embodiments, when the traffic that can be provided by the snapshot copy cannot provide the overall traffic of the cloud disks on the link, the delay increases. In this case, a proportion of cloud disks whose delay duration X of processing data requests in the elastic storage cluster exceeds the rated delay Y increases.

Optionally, the average delay duration of the plurality of cloud disks for processing the snapshot read requests may be represented as: $\overline{X} = \frac{{\sum }_{i = 1}^{n} {X}_{i}}{n}$
where n represents the number of the plurality of cloud disks, and *Xᵢ* represents a delay duration of an i-th cloud disk for processing the snapshot read request.

Further, when the delay of each cloud disk fluctuates within a specific traffic mean square error range, the delay is within a normal fluctuation range. In this case, to smooth the delay calculation, the delay of each cloud disk needs to be within a specific mean square error range. When the delay is greater than a preset mean square error range, the delay of the cloud disk may not be considered.

Optionally, the mean square error range corresponding to the delay of each cloud disk may be represented as:
${σ}^{2} = {\sum }_{i = 1}^{n} \left({X}_{i}-\overline{X}\right) / n$
where n represents the number of the plurality of cloud disks, *Xᵢ* represents the delay duration of the i-th cloud disk for processing the snapshot read request, and *X̅* represents the average delay duration.
(c) Determining the delay traffic corresponding to the elastic storage cluster based on the average delay duration, the rated delay duration, and the traffic of each cloud disk for receiving the snapshot read request.

Optionally, the delay traffic corresponding to the elastic storage cluster may be represented as:
$A = \frac{\overline{X}}{Y} {\sum }_{i = 1}^{n} {S}_{i} / n$
where n represents the number of the plurality of cloud disks, *X̅* represents the average delay duration, Y represents the rated delay duration of the cloud disk for processing the snapshot read request, and *Sᵢ* represents the traffic of the ith cloud disk.
(2) Determining a first number of snapshot copies required for the plurality of cloud disks in the elastic storage cluster based on a ratio of the delay traffic to traffic that can be provided by a single snapshot copy.

Optionally, determining the first number of snapshot copies required for the plurality of cloud disks in the elastic storage cluster may be represented as:
$N = A / T$
where T represents the traffic that can be provided by the single snapshot copy, and A represents the delay traffic corresponding to the elastic storage cluster.

Further, because it takes a certain time to download a copy, we need to perform capacity expansion in advance when an increase in the user traffic is sensed. Therefore, a user-level elastic capacity expansion coefficient (P) is added. When the traffic occupancy of the cloud disk reaches the capacity expansion coefficient, corresponding copies start to be added. Correspondingly, in this step, the calculation formula for determining the first number of snapshot copies required for the plurality of cloud disks in the elastic storage cluster may be modified as follows:
$N = A / \left(T∗P\right)$
where a value of the coefficient P is not specifically limited, and may be defined based on different user types, different user services, and different cloud disk types, to achieve the purpose of flexibly expanding the copies.

(3) Increasing the number of snapshot copies corresponding to the plurality of cloud disks to the first number.

In at least one embodiment of the present disclosure, due to the introduction of the soft link, the operation in the entire process becomes very lightweight, and only an instruction needs to be sent to a cloud disk server to switch a read path for a specified cloud disk. Moreover, to re-link a new snapshot copy, only a new log file name needs to be written into the manifest file of the cloud disk at one time, to complete the switching action.

In some embodiments, when the cloud disk includes a plurality of cloud disk segments, the read path may be switched for a specified cloud disk segment (Segment) by the cloud disk server (Block Server). Moreover, to re-link a new snapshot copy, only a new log file name needs to be written into the manifest file (Manifest) of the cloud disk segment (Segment) at one time, to complete the switching action. In addition, the Softlink is performed at the granularity of the cloud disk segment (Segment), and the underlying capability required is one order of magnitude less than that of the Hardlink, and therefore the switching speed is faster.

In some embodiments, when the cloud disk server (Block Server) feeds back that the traffic increase reaches the requirement for expanding a copy, some cloud disks (Devices) may be immediately switched to the Lazyload path, and the traffic provided by the object storage and the snapshot data cache is used to support the read and write of the cloud disks (Devices). After the capacity expansion of the copy is completed, some cloud disks (Devices) are switched to the new copy. Correspondingly, the method further includes the following step.

S13: switching, in response to the completion of downloading of a newly added snapshot copy, the snapshot read requests of the target cloud disks from the lazy loading path to the newly added snapshot copy for reading.

Optionally, switching the snapshot read requests of the target cloud disks from the lazy loading path to the newly added snapshot copy for reading may include: writing the snapshot log identifier of each snapshot log in the newly added snapshot copy in batch into the manifest file of the target cloud disk, and adding a mapping relationship between the snapshot log identifier and index information of each snapshot log to the log index information of the target cloud disk, where the mapping relationship is used to implement data transmission between the target cloud disk and each snapshot log in the newly added snapshot copy.

It should be noted that there is a plurality of target cloud disks, and there are one or more newly added snapshot copies. When there is one newly added snapshot copy, the traffic of the plurality of target cloud disks is processed by the one newly added snapshot copy. When there is a plurality of newly added snapshot copies, the traffic of the plurality of target cloud disks is processed by the plurality of newly added snapshot copies. Optionally, the plurality of target cloud disks may be divided based on the number of newly added snapshot copies. In this case, only the snapshot log identifiers of the respective snapshot logs in the newly added snapshot copy corresponding to a target cloud disk need to be written in batch into the manifest file of the target cloud disk.

For example, there are 100 target cloud disks: a target cloud disk 1 to a target cloud disk 100. There are two newly added snapshot copies: a newly added snapshot copy 1 and a newly added snapshot copy 2. In this case, the plurality of target cloud disks may be divided based on the number of newly added snapshot copies. The newly added snapshot copy 1 corresponds to the target cloud disk 1 to the target cloud disk 50, and the newly added snapshot copy 2 corresponds to the target cloud disk 51 to the target cloud disk 100.

Exemplarily, the dynamic copy expansion process is shown in Fig. 6.
1. It is assumed that all the current cloud disks (Devices) are linked to one snapshot copy (Snapshot Copy).
2. The cloud disk server (Block Server) reports information such as traffic and a delay of each cloud disk to the cloud disk manager (Block Master).
3. The cloud disk manager (Block Master) reports information such as the delay and the traffic of each cloud disk to the snapshot copy manager (Snapshot Manager).
4. The snapshot copy manager (Snapshot Manager) controls some cloud disks (Devices) linked to the snapshot copy to switch to the Lazyload path for reading.
5. The snapshot copy manager (Snapshot Manager) warms up a snapshot copy (that is, adds a new snapshot copy) in the background based on the information such as the traffic and the delay.
6. The snapshot read requests of some cloud disks (that is, the plurality of target cloud disks determined in S11) are switched to the object storage or a snapshot cache to read data.
7. After the new snapshot copy is downloaded, the cloud disk that is switched to the Lazyload path is re-linked to the new snapshot copy.

In at least one embodiment of the present disclosure, because downloading the snapshot copy usually requires downloading several tens of gigabytes or even hundreds of gigabytes of data from the object storage, the increase in the user delay cannot be relieved accordingly until the copy download is completed. Therefore, the data volume read during the copy expansion is usually not particularly large, and therefore a temporary traffic bearing manner is required to provide additional traffic.

The present disclosure reuses the lazy loading path of the EBS cluster. When the copy traffic is insufficient, the traffic of some cloud disks is automatically switched to the lazy loading path to read the corresponding snapshot data from the object storage or the cache. In this way, the excess traffic is offloaded to the lazy loading path to provide greater bandwidth and lower delay. At the same time, the download of the new snapshot copy is initiated in the background. After the new snapshot copy is downloaded, the cloud disk that is switched to the lazy loading path is re-linked to the new snapshot copy. During this process, due to the lightweight copy linking solution, it is no longer dependent on the underlying storage to manage the link relationship of the copies. In the preceding process of switching the lazy loading path, the preceding lightweight copy linking solution may be combined to implement a fast copy traffic switch.

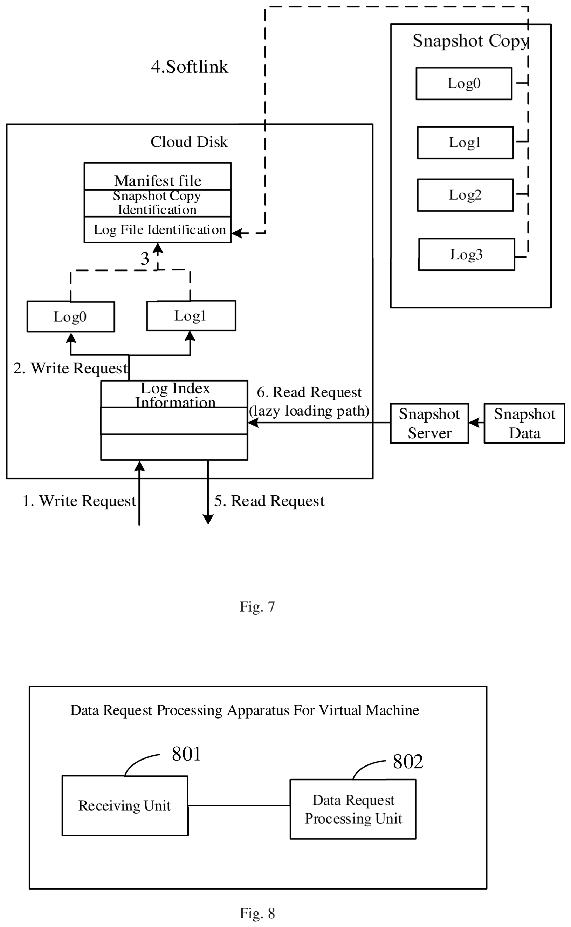

It should be noted that the snapshot copy download requires a corresponding time period to copy a new copy from the object storage, and it takes a long time to use the new copy to bear the traffic when the traffic suddenly increases. During this period, the lazy loading path may be used to bear part of the traffic for reading the snapshot data, to make the traffic switch smoother. Therefore, this requires that the switching of the lazy loading path is lightweight and fast enough. As shown in Fig. 7, the lazy loading path switching strategy is described as follows. 1. The write traffic is still written into the new log file. 2. The Log link in the Manifest remains unchanged. 3. The Log file of the Softlink still remains in the Manifest, and may be switched at any time from the lazy loading state. 4. The read traffic is switched in the IndexMap. 5. When the lazy loading state is switched to, the Log file read traffic corresponding to the snapshot copy is switched to the snapshot server. 6. The snapshot server then reads from the snapshot data.

Before the capacity expansion is completed, the traffic may be temporarily switched to the lazy loading path, and the lazy loading path is allocated based on the delay and the traffic of the cloud disk, to dynamically balance the cloud disk traffic among the copies that need to be switched, thereby reducing the processing delay caused by a sudden increase in the traffic during the snapshot copy download, and enabling the traffic switch to be smoother.

In at least one embodiment of the present disclosure, a common usage method of an elastic user is to create more virtual machines and more cloud disks to provide business services during the business peak period. After the business peak period ends, the excess resources are deleted to save costs. When the elastic business of the user ends, the elastic block storage (EBS) cluster also needs to correspondingly reduce costs. In this case, it is necessary to determine whether the number of copies may be reduced based on information such as the number, the traffic, and the delay of cloud disks (Devices) used by the user. In this way, the storage costs of the elastic block storage (EBS) cluster may be reduced accordingly.

In some embodiments, the elastic block storage (EBS) cluster may also detect whether a copy is reduced while detecting whether a copy is added (that is, a copy garbage collection solution). Optionally, the elastic block storage (EBS) cluster may dynamically reduce the number of copies based on the traffic feedback.

A method for dynamically reducing the number of copies includes S21 to S23.

In S21, the delay traffic corresponding to the elastic storage cluster is periodically determined, and a first number of snapshot copies required for a plurality of cloud disks in the elastic storage cluster is determined based on a ratio of the delay traffic to traffic that can be provided by a single snapshot copy.

The method for determining the delay traffic corresponding to the elastic storage cluster in S21 is the same as the method for determining the delay traffic corresponding to the elastic storage cluster in S12, and details are not described herein again.

In S22, in response to a duration in which the first number is less than a second number of current snapshot copies being greater than a preset duration, a third number of snapshot copies to be deleted is determined based on a difference between the second number and the first number.

In S23, the snapshot copies with the third number are deleted, and snapshot read requests of the cloud disks are switched from the deleted snapshot copy to the undeleted snapshot copy for reading.

Optionally, switching the snapshot read requests of the cloud disks from the deleted snapshot copy to the undeleted snapshot copy for reading includes: writing snapshot log identifiers of each snapshot log in the undeleted snapshot copy in batch into the manifest file of the cloud disk, and adding a mapping relationship between the snapshot log identifier and index information of each snapshot log in the undeleted snapshot copy to the log index information of the cloud disk, where the mapping relationship is used to implement data transmission between the cloud disk and each snapshot log in the undeleted snapshot copy.

Exemplarily, the process of the copy garbage collection solution may include the following steps. 1. The cloud disks (Devices) are linked to different snapshot copies. 2. The cloud disk server (Block Server) reports information such as the traffic and the delay of each cloud disk to the cloud disk manager (Block Master). 3. The cloud disk manager (Block Master) reports information such as the delay and the traffic of each cloud disk to the snapshot copy manager (Snapshot Manager). 4. The snapshot copy manager (Snapshot Manager) determines, based on a plurality of dimensions such as the delay and the traffic of each cloud disk, the number of snapshot copies to be reduced. The cloud disks (Devices) corresponding to the snapshot copies to be reduced are re-linked to one or N other snapshot copies through the same soft link modification method as that for copy expansion. 5. The snapshot copy manager (Snapshot Manager) reclaims the excess snapshot copies.

In at least one embodiment of the present disclosure, the value of the preset duration is not specifically limited. Optionally, the preset duration may be four hours, one day, or one week.

Because the number of copies is dynamically reduced based on the feedback information about the number of cloud disks linked to the snapshot copies, the cloud disk traffic, and the delay, the space occupancy by excess copies is avoided, and the resource utilization is improved.

It should be noted that in response to the required number of copies being less than the current number of copies and remains stable for a preset duration, the copies are reclaimed, and the preset duration is defined as t. On this basis, a user-level elastic shrinkage coefficient Q may be added, and when the traffic occupancy of the cloud disk reaches the elastic shrinkage coefficient, the corresponding snapshot copies start to be reduced. Correspondingly, the calculation formula for the first number of snapshot copies may be modified as follows:
$N = A / \left(t∗Q\right)$

Further, the threshold may be accelerated in a stepped manner. It is assumed that the cluster is divided into three levels: a high-water-level cluster, a medium-water-level cluster, and a low-water-level cluster. A coefficient of the preset duration may be set as follows: 0.4t for the high-water-level cluster, 0.6t for the medium-water-level cluster, and 0.8t for the low-water-level cluster. A smaller coefficient of the preset duration leads to earlier reclamation of the corresponding snapshot copy. The high-water-level cluster needs to use a more aggressive strategy to reclaim the corresponding snapshot copy as soon as possible, and thus corresponds to a smallest coefficient.

Fig. 8 is a schematic diagram of a structure of a data request processing apparatus for a virtual machine according to an embodiment of the present disclosure. As shown in Fig. 8, the data request processing apparatus includes a receiving unit 801 and a data request processing unit 802.

The receiving unit 801 is configured to determine, from log index information of a cloud disk, a target snapshot log identifier corresponding to target index information, in response to the cloud disk receiving a snapshot read request that carries the target index information corresponding to a target snapshot log and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk and is used to implement data transmission between the cloud disk and each snapshot log in the snapshot copy.

The data request processing unit 802 is configured to read the target snapshot log in the snapshot copy by using the target snapshot log identifier, and feed back the target snapshot log to the virtual machine.

According to one or more embodiments of the present disclosure, the cloud disk includes a plurality of cloud disk segments, the snapshot copy includes a plurality of snapshot segments in a one-to-one correspondence with the plurality of cloud disk segments, and each snapshot segment includes a plurality of snapshot logs, where for each cloud disk segment, a manifest file of the cloud disk segment is pre-written with snapshot log identifiers of a plurality of snapshot logs of a snapshot segment corresponding to the cloud disk segment, and the snapshot log identifier in log index information of the cloud disk segment is synchronously updated based on the snapshot log identifier obtained by parsing the manifest file of the cloud disk segment.

According to one or more embodiments of the present disclosure, the data request processing unit 802 is further configured to: in response to the cloud disk receiving a data write request sent by any virtual machine among the virtual machines to be started in batch, create a new log file in the cloud disk; and write a log identifier of the new log file into the manifest file of the cloud disk, and add index information corresponding to the log identifier of the new log file to the log index information of the cloud disk.

According to one or more embodiments of the present disclosure, the apparatus further includes a copy regulation unit. The copy regulation unit is configured to monitor traffic of snapshot read requests received by a plurality of cloud disks in an elastic storage cluster, and in response to the traffic reaching preset traffic, select a plurality of target cloud disks from the plurality of cloud disks; and switch snapshot read requests of the plurality of target cloud disks to a lazy loading path for reading, and increase the number of snapshot copies corresponding to the plurality of cloud disks.

According to one or more embodiments of the present disclosure, the action of the copy regulation unit of increasing the number of snapshot copies corresponding to the plurality of cloud disks includes: determining delay traffic corresponding to the elastic storage cluster; determining a first number of snapshot copies required for the plurality of cloud disks in the elastic storage cluster based on a ratio of the delay traffic to traffic that is capable of being provided by a single snapshot copy; and increasing the number of the snapshot copies corresponding to the plurality of cloud disks to the first number.

According to one or more embodiments of the present disclosure, the action of the copy regulation unit of determining the delay traffic corresponding to the elastic storage cluster includes: acquiring a delay duration of each cloud disk for processing the snapshot read request, a rated delay duration of the cloud disk for processing the snapshot read request, and traffic of each cloud disk for receiving the snapshot read request; determining an average delay duration of the plurality of cloud disks for processing the snapshot read requests based on the delay duration of each cloud disk for processing the snapshot read request; and determining the delay traffic corresponding to the elastic storage cluster based on the average delay duration, the rated delay duration, and the traffic of each cloud disk for receiving the snapshot read request.

According to one or more embodiments of the present disclosure, the copy regulation unit is further configured to: in response to a completion of downloading a newly added snapshot copy, switch the snapshot read requests of the target cloud disks from the lazy loading path to the newly added snapshot copy for reading.

According to one or more embodiments of the present disclosure, the action of the copy regulation unit of switching the snapshot read requests of the target cloud disks from the lazy loading path to the newly added snapshot copy for reading includes: writing a snapshot log identifier of each snapshot log in the newly added snapshot copy in batch into a manifest file of the target cloud disk, and adding a mapping relationship between the snapshot log identifier and index information of each snapshot log to the log index information of the target cloud disk.

According to one or more embodiments of the present disclosure, the copy regulation unit is further configured to periodically determine the delay traffic corresponding to the elastic storage cluster, and determine the first number of snapshot copies required for the plurality of cloud disks in the elastic storage cluster based on the ratio of the delay traffic to the traffic that is capable of being provided by the single snapshot copy; and in response to a duration in which the first number being less than a second number of current snapshot copies is greater than a preset duration, determine a third number of snapshot copies to be deleted based on a difference between the second number and the first number; and delete the snapshot copies with the third number, and switch snapshot read requests of the cloud disks from a deleted copy to an undeleted snapshot copy for reading.

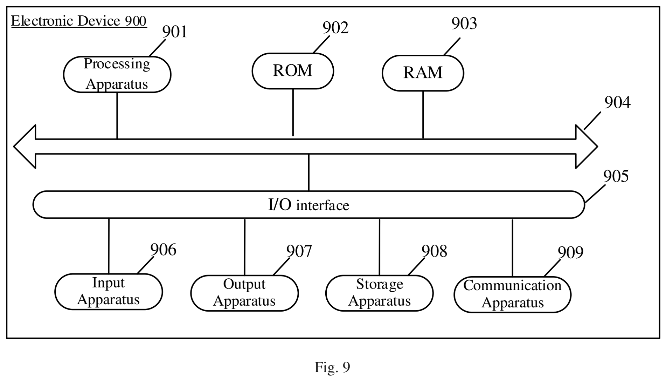

Fig. 9 is a schematic diagram of a structure of an electronic device 900 suitable for implementing an embodiment of the present disclosure. The electronic device 900 may be a terminal device or a server. The terminal device may include, but is not limited to, a mobile terminal such as a mobile phone, a notebook computer, a digital broadcast receiver, a personal digital assistant (abbreviated as PDA), a tablet computer, a portable media player (abbreviated as PMP), and an in-vehicle terminal (such as an in-vehicle navigation terminal), and a stationary terminal such as a digital TV and a desktop computer. The electronic device shown in Fig. 9 is merely an example, and shall not impose any limitation on the function and scope of use of the embodiments of the present disclosure.

As shown in Fig. 9, the electronic device 900 may include a processing apparatus (such as a central processing unit and a graphics processor) 901, which may perform various appropriate actions and processing according to a program stored in a read-only memory (abbreviated as ROM) 902 or a program loaded from a storage apparatus 908 into a random access memory (abbreviated as RAM) 903. The RAM 903 further stores various programs and data required for the operation of the electronic device 900. The processing apparatus 901, the ROM 902, and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, and a gyroscope; an output apparatus 907 including, for example, a liquid crystal display (abbreviated as LCD), a speaker, and a vibrator; the storage apparatus 908 including, for example, a magnetic tape and a hard disk; and a communication apparatus 909. The communication apparatus 909 may allow the electronic device 900 to perform wireless or wired communication with other devices to exchange data. Although Fig. 9 shows the electronic device 900 having various apparatuses, it should be understood that it is not necessary to implement or provide all the apparatuses shown. Alternatively, more or fewer apparatuses may be implemented or provided.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program contains program code for performing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the foregoing functions defined in the method of the at least one embodiment of the present disclosure are performed.

It should be noted that the computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, device, or any suitable combination thereof. More specific examples of the computer-readable storage medium may include, but are not limited to, an electrically connected portable computer magnetic disk having one or more wires, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, and the program may be used by or used in combination with an instruction execution system, apparatus, or device. In the present disclosure, the computer-readable signal medium may include a data signal propagated on a baseband or as a part of a carrier, and computer-readable program code is carried in the data signal. The data signal propagated in this manner may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code contained on the computer-readable medium may be transmitted in any suitable medium, including, but not limited to, a wire, an optical cable, an RF (radio frequency), or any suitable combination thereof.

The computer-readable medium may be included in the electronic device, or may exist alone without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages or a combination thereof. The foregoing programming languages include object-oriented programming languages such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or a server. In the case involving the remote computer, the remote computer may be connected to the computer of the user through any kind of network, including a local area network (abbreviated as LAN) or a wide area network (abbreviated as WAN), or may be connected to an external computer (for example, connected through the Internet with the aid of an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of the unit does not constitute a limitation on the unit itself under certain circumstances.

The functions described above herein may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

One or more embodiments of the present disclosure provide a data request processing method for a virtual machine, including:
determining, from log index information of a cloud disk, a target snapshot log identifier corresponding to target index information, in response to the cloud disk receiving a snapshot read request that carries the target index information corresponding to a target snapshot log and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk and is used to implement data transmission between the cloud disk and each snapshot log in the snapshot copy; and
reading the target snapshot log in the snapshot copy by using the target snapshot log identifier, and feeding back the target snapshot log to the virtual machine.

According to one or more embodiments of the present disclosure, the cloud disk includes a plurality of cloud disk segments, the snapshot copy includes a plurality of snapshot segments in a one-to-one correspondence with the plurality of cloud disk segments, and each snapshot segment includes a plurality of snapshot logs, where for each cloud disk segment, a manifest file of the cloud disk segment is pre-written with snapshot log identifiers of a plurality of snapshot logs of a snapshot segment corresponding to the cloud disk segment, and a snapshot log identifier in log index information of the cloud disk segment is synchronously updated based on a snapshot log identifier obtained by parsing the manifest file of the cloud disk segment.

According to one or more embodiments of the present disclosure, the method further includes: creating a new log file in the cloud disk, in response to the cloud disk receiving a data write request sent by any virtual machine among the virtual machines to be started in batch; and writing a log identifier of the new log file into the manifest file of the cloud disk, and adding index information corresponding to the log identifier of the new log file to the log index information of the cloud disk.

According to one or more embodiments of the present disclosure, the method further includes: monitoring traffic of snapshot read requests received by a plurality of cloud disks in an elastic storage cluster, and in response to the traffic reaching preset traffic, selecting a plurality of target cloud disks from the plurality of cloud disks; and switching snapshot read requests of the plurality of target cloud disks to a lazy loading path for reading, and increasing the number of snapshot copies corresponding to the plurality of cloud disks.

According to one or more embodiments of the present disclosure, the action of increasing the number of snapshot copies corresponding to the plurality of cloud disks includes: determining delay traffic corresponding to the elastic storage cluster; determining a first number of snapshot copies required for the plurality of cloud disks in the elastic storage cluster based on a ratio of the delay traffic to traffic that is capable of being provided by a single snapshot copy; and increasing the number of the snapshot copies corresponding to the plurality of cloud disks to the first number.

According to one or more embodiments of the present disclosure, the action of determining the delay traffic corresponding to the elastic storage cluster includes: acquiring a delay duration of each cloud disk for processing a snapshot read request, a rated delay duration of the cloud disk for processing a snapshot read request, and traffic of each cloud disk for receiving a snapshot read request; determining an average delay duration of the plurality of cloud disks for processing the snapshot read requests based on the delay duration of each cloud disk for processing the snapshot read request; and determining the delay traffic corresponding to the elastic storage cluster based on the average delay duration, the rated delay duration, and the traffic of each cloud disk for receiving a snapshot read request.

According to one or more embodiments of the present disclosure, the method further includes: switching the snapshot read requests of the target cloud disks from the lazy loading path to a newly added snapshot copy for reading, in response to a completion of downloading a newly added snapshot copy.

According to one or more embodiments of the present disclosure, the action of switching the snapshot read requests of the target cloud disks from the lazy loading path to the newly added snapshot copy for reading includes: writing a snapshot log identifier of each snapshot log in the newly added snapshot copy in batch into a manifest file of the target cloud disk, and adding a mapping relationship between a snapshot log identifier and index information of each snapshot log to log index information of the target cloud disk.

According to one or more embodiments of the present disclosure, the method further includes: periodically determining the delay traffic corresponding to the elastic storage cluster, and determining the first number of snapshot copies required for the plurality of cloud disks in the elastic storage cluster based on the ratio of the delay traffic to the traffic that is capable of being provided by the single snapshot copy; and in response to a duration in which the first number being less than a second number of current snapshot copies is greater than a preset duration, determining a third number of snapshot copies to be deleted based on a difference between the second number and the first number; and deleting snapshot copies with the third number, and switching snapshot read requests of the cloud disks from a deleted snapshot copy to an undeleted snapshot copy for reading.

One or more embodiments of the present disclosure provide a data request processing apparatus for a virtual machine, including:
a receiving unit configured to determine, from log index information of a cloud disk, a target snapshot log identifier corresponding to target index information, in response to the cloud disk receiving a snapshot read request that carries the target index information corresponding to a target snapshot log and that is sent by any virtual machine among virtual machines to be started in batch, where the snapshot read request is used to request to read the target snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk and is used to implement data transmission between the cloud disk and each snapshot log in the snapshot copy; and
a data request processing unit configured to read the target snapshot log in the snapshot copy by using the target snapshot log identifier, and feed back the target snapshot log to the virtual machine.

According to one or more embodiments of the present disclosure, the cloud disk includes a plurality of cloud disk segments, the snapshot copy includes a plurality of snapshot segments in a one-to-one correspondence with the plurality of cloud disk segments, and each snapshot segment includes a plurality of snapshot logs, where for each cloud disk segment, a manifest file of the cloud disk segment is pre-written with snapshot log identifiers of a plurality of snapshot logs of a snapshot segment corresponding to the cloud disk segment, and a snapshot log identifier in log index information of the cloud disk segment is synchronously updated based on a snapshot log identifier obtained by parsing the manifest file of the cloud disk segment.

According to one or more embodiments of the present disclosure, the data request processing unit is further configured to: create a new log file in the cloud disk, in response to the cloud disk receiving a data write request sent by any virtual machine among the virtual machines to be started in batch; and write a log identifier of the new log file into the manifest file of the cloud disk, and add index information corresponding to the log identifier of the new log file to the log index information of the cloud disk.

According to one or more embodiments of the present disclosure, the apparatus further includes a copy regulation unit. The copy regulation unit is configured to monitor traffic of snapshot read requests received by a plurality of cloud disks in an elastic storage cluster, and in response to the traffic reaching preset traffic, select a plurality of target cloud disks from the plurality of cloud disks; and switch snapshot read requests of the plurality of target cloud disks to a lazy loading path for reading, and increase a number of snapshot copies corresponding to the plurality of cloud disks.

According to one or more embodiments of the present disclosure, the action of the copy regulation unit of increasing the number of snapshot copies corresponding to the plurality of cloud disks includes: determining delay traffic corresponding to the elastic storage cluster; determining a first number of snapshot copies required for the plurality of cloud disks in the elastic storage cluster based on a ratio of the delay traffic to traffic that is capable of being provided by a single snapshot copy; and increasing the number of the snapshot copies corresponding to the plurality of cloud disks to the first number.

According to one or more embodiments of the present disclosure, the action of the copy regulation unit of determining the delay traffic corresponding to the elastic storage cluster includes: acquiring a delay duration of each cloud disk for processing a snapshot read request, a rated delay duration of the cloud disk for processing a snapshot read request, and traffic of each cloud disk for receiving a snapshot read request; determining an average delay duration of the plurality of cloud disks for processing the snapshot read requests based on the delay duration of each cloud disk for processing the snapshot read request; and determining the delay traffic corresponding to the elastic storage cluster based on the average delay duration, the rated delay duration, and the traffic of each cloud disk for receiving a snapshot read request.

According to one or more embodiments of the present disclosure, the copy regulation unit is further configured to: switch the snapshot read requests of the target cloud disks from the lazy loading path to a newly added snapshot copy for reading, in response to a completion of downloading the newly added snapshot copy.

According to one or more embodiments of the present disclosure, the action of the copy regulation unit of switching the snapshot read requests of the target cloud disks from the lazy loading path to the newly added snapshot copy for reading includes: writing a snapshot log identifier of each snapshot log in the newly added snapshot copy in batch into a manifest file of the target cloud disk, and adding a mapping relationship between a snapshot log identifier and index information of each snapshot log to log index information of the target cloud disk.

According to one or more embodiments of the present disclosure, the copy regulation unit is further configured to periodically determine the delay traffic corresponding to the elastic storage cluster, and determine the first number of snapshot copies required for the plurality of cloud disks in the elastic storage cluster based on the ratio of the delay traffic to the traffic that is capable of being provided by the single snapshot copy; and in response to a duration in which the first number being less than a second number of current snapshot copies is greater than a preset duration, determine a third number of snapshot copies to be deleted based on a difference between the second number and the first number; and delete snapshot copies with the third number, and switch snapshot read requests of the cloud disks from a deleted snapshot copy to an undeleted snapshot copy for reading.

One or more embodiments of the present disclosure provide an electronic device, including: at least one processor and at least one memory;
where the at least one memory stores a computer-executed instruction; and
the at least one at least one processor executes the computer-executed instruction stored in the at least one memory, to enable the at least one at least one processor to execute the data request processing method for the virtual machine according to at least one of the above embodiments.

One or more embodiments of the present disclosure provide a non-transitory computer-readable storage medium, where a computer-executed instruction is stored in the non-transitory computer-readable storage medium, and when the computer-executed instruction is executed by a processor, the data request processing method for the virtual machine according to at least one of the above embodiments is implemented.

One or more embodiments of the present disclosure provide a computer program product, including a computer program, where when the computer program is executed by a processor, the data request processing method for the virtual machine according to at least one of the above embodiments is implemented.

The above description illustrates merely preferred embodiments of the present disclosure and explanations of the applied technical principles. Those skilled in the art should understand that the scope of disclosure involved in the present disclosure is not limited to the technical solutions formed by specific combinations of the above technical features, and shall also cover other technical solutions formed by any combination of the above technical features or equivalent features thereof without departing from the above concept of disclosure. For example, a technical solution formed by a replacement of the above features with technical features with similar functions disclosed in the present disclosure (but not limited thereto) also falls within the scope of the present disclosure.

In addition, although the various operations are depicted in a specific order, it should not be understood as requiring these operations to be performed in the specific order shown or in a sequential order. Under specific circumstances, multitasking and parallel processing may be advantageous. Similarly, although several specific implementation details are included in the preceding discussions, these details should not be construed as limiting the scope of the present disclosure. Some features that are described in the context of separate embodiments may alternatively be implemented in combination in a single embodiment. In contrast, various features described in the context of a single embodiment may alternatively be implemented in a plurality of embodiments individually or in any suitable sub combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A data request processing method for a virtual machine, comprising:
determining, from log index information of a cloud disk, a first snapshot log identifier corresponding to first index information, in response to the cloud disk receiving a snapshot read request that carries the first index information corresponding to a first snapshot log and that is sent by any virtual machine among virtual machines to be started in batch, wherein the snapshot read request is used to request to read the first snapshot log in a snapshot copy required for starting the virtual machine, the log index information of the cloud disk is used to store a mapping relationship between a snapshot log identifier and index information, and the mapping relationship is synchronously updated based on a snapshot log identifier obtained by parsing a manifest file of the cloud disk and is used to implement data transmission between the cloud disk and each snapshot log in the snapshot copy; and
reading the first snapshot log in the snapshot copy by using the first snapshot log identifier, and feeding back the first snapshot log to the virtual machine.

2. The data request processing method according to claim 1, wherein the cloud disk comprises a plurality of cloud disk segments, the snapshot copy comprises a plurality of snapshot segments **in** a one-to-one correspondence with the plurality of cloud disk segments, and each snapshot segment comprises a plurality of snapshot logs,
wherein for each cloud disk segment, a manifest file of the cloud disk segment is pre-written with snapshot log identifiers of a plurality of snapshot logs of a snapshot segment corresponding to the cloud disk segment, and a snapshot log identifier in log index information of the cloud disk segment is synchronously updated based on a snapshot log identifier obtained by parsing the manifest file of the cloud disk segment.

3. The data request processing method according to claim 1 or 2, further comprising:
creating a new log file in the cloud disk, in response to the cloud disk receiving a data write request sent by any virtual machine among the virtual machines to be started in batch; and
writing a log identifier of the new log file into the manifest file of the cloud disk, and adding index information corresponding to the log identifier of the new log file to the log index information of the cloud disk.

4. The data request processing method according to any one of claims 1-3, further comprising:
monitoring traffic of snapshot read requests received by a plurality of cloud disks in an elastic storage cluster, and in response to the traffic reaching preset traffic, selecting a plurality of first cloud disks from the plurality of cloud disks; and
switching snapshot read requests of the plurality of first cloud disks to a lazy loading path for reading, and increasing a number of snapshot copies corresponding to the plurality of cloud disks.

5. The data request processing method according to claim 4, wherein increasing the number of the snapshot copies corresponding to the plurality of cloud disks comprises:
determining delay traffic corresponding to the elastic storage cluster;
determining a first number of snapshot copies required for the plurality of cloud disks in the elastic storage cluster based on a ratio of the delay traffic to traffic that is capable of being provided by a single snapshot copy; and
increasing the number of the snapshot copies corresponding to the plurality of cloud disks to the first number.

6. The data request processing method according to claim 5, wherein determining the delay traffic corresponding to the elastic storage cluster comprises:
acquiring a delay duration of each cloud disk for processing a snapshot read request, a rated delay duration of the cloud disk for processing a snapshot read request, and traffic of each cloud disk for receiving a snapshot read request;
determining an average delay duration of the plurality of cloud disks for processing the snapshot read requests based on the delay duration of each cloud disk for processing the snapshot read request; and
determining the delay traffic corresponding to the elastic storage cluster based on the average delay duration, the rated delay duration, and the traffic of each cloud disk for receiving a snapshot read request.

7. The data request processing method according to any one of claims 4-6, further comprising:
switching the snapshot read requests of the first cloud disks from the lazy loading path to a newly added snapshot copy for reading, in response to a completion of downloading the newly added snapshot copy.

8. The data request processing method according to claim 7, wherein switching the snapshot read requests of the first cloud disks from the lazy loading path to the newly added snapshot copy for reading comprises:
writing a snapshot log identifier of each snapshot log in the newly added snapshot copy in batch into a manifest file of the first cloud disk, and adding a mapping relationship between a snapshot log identifier and index information of each snapshot log to log index information of the first cloud disk,
wherein the mapping relationship is used to implement data transmission between the first cloud disk and each snapshot log in the newly added snapshot copy.

9. The data request processing method according to claim 4, further comprising:
periodically determining delay traffic corresponding to the elastic storage cluster, and determining a first number of snapshot copies required for the plurality of cloud disks in the elastic storage cluster based on a ratio of the delay traffic to traffic that is capable of being provided by a single snapshot copy;
in response to a duration in which the first number being less than a second number of current snapshot copies is greater than a preset duration, determining a third number of snapshot copies to be deleted based on a difference between the second number and the first number; and
deleting snapshot copies with the third number, and switching snapshot read requests of the cloud disks from a deleted snapshot copy to an undeleted snapshot copy for reading.

10. An electronic device, comprising: at least one processor and at least one memory,
wherein the at least one memory stores a computer-executed instruction; and
the at least one processor executes the computer-executed instruction stored in the at least one memory, to enable the at least one processor to execute the data request processing method for the virtual machine according to any one of claims 1 to 9.

11. A non-transitory computer-readable storage medium, wherein a computer-executed instruction is stored in the non-transitory computer-readable storage medium, and when the computer-executed instruction is executed by a processor, the data request processing method for the virtual machine according to any one of claims 1 to 9 is implemented.
